# EUROPEAN PATENT APPLICATION

(11) **EP 3 098 726 A1**
(43) Date of publication of application: **30.11.2016**
(21) Application number: 14880129.3
(22) Date of filing: 07.02.2014
(51) Int. Cl.: G06F 17/30

(54) **METHOD FOR EXTRACTING USEFUL CONTENT FROM SETUP FILES OF MOBILE APPLICATIONS**

(30) Priority: 24.01.2014 RU 2014102136
(71) Applicant: Zakrytoe Aktsionernoe Obschestvo "RIVV", Moscow 127015 (RU)
(72) Inventor: NAGORNY, Alexei Sergeevich, Moscow 123001 (RU)
(74) Representative: Chimini, Francesco
(86) International application number: PCT/RU2014/000082
(87) International publication number: WO 2015/112049

(57) **Abstract**

The present invention is associated with digital data processing using computer systems, namely, with data processing methods specially intended for specific functions of mobile applications. The technical result is the automatic extraction of useful content from setup files of mobile applications for further indexing, computerised data processing, and storage of useful content of mobile applications in a database on a server for subsequent searches. The method of extraction of useful content from setup files of mobile applications for further computer data processing includes stages that involve the download of the application setup file (always representing a certain archive) from the Internet to a server; selection of the corresponding archiver; decompression of the downloaded setup file into a file directory if the archiver has been successfully selected; analysis of the resulting directory and compilation of a list of files located therein; selection of a file from the list for further analysis; selection of software to open the file by searching through all known formats; analysis of the chosen file for primary content retrieval if the file reading software has been successfully selected; compilation of a list of primary content internal location addresses in the form of a rowset; analysis of the next file so far as there are files in the directory; analysis of the text content of the list of primary content internal location addresses and division of the text of each row into a set of characters identifying the content unit storage method, a set of characters identifying the document, to which a given content unit pertains, and a set of characters identifying the type of this content unit; division of the rows of content unit internal location addresses into utility and useful content by the storage method; removal of the utility content; selection of rowsets in the remaining list with content unit internal location addresses that contain a set of characters totally matching by location and text and reflecting the content storage; statistical filtration of selected groups; analysis of the text content of the address list rows by the set of characters that identify a document, and selection of the content unit address groups pertaining to each document of the application useful content; download of useful content pertaining to each document into a separate file to form application documents; indexation of the obtained document files of an application with respect to their belonging thereto to generate a description of the application content; saving of the application name, link, and description to the database; download of the setup file of a new application and performance of all the described sequences; performance of computerised processing of the obtained database; storage of the created indexed database array on the server; usage of the database for users' search queries received via the Internet.

## Description

### Field of the Invention

The present invention is associated with digital data processing using computer systems, namely, with data processing methods specially intended for specific functions of mobile applications.

### Prior Art

The search engines that are widely known and commonly used around the world allow Internet users to search for Web pages containing the desired information by entering search queries. The most popular search engines include, in particular, Yahoo!, Google, Yandex, and Rambler.

The general operating principle of these search machines is based on gathering information from Web pages, its processing and indexing to enable users to search for desired information in the amount processed by the computer. Each search engine comprises Web crawlers designed to scan and download Web pages. After referring to the specified address of a Web page, a Web crawler browses, for example, http headings to check when this page was modified last. If the Web crawler has already browsed this page and the last modification date of the page has changed, it will then download the page for reprocessing. If the Web page reviewed by the Web crawler has never been viewed before, it will be immediately downloaded for processing.

Web pages downloaded by a Web crawler are processed by relevant software/hardware components of a search engine. Such processing is intended for the analysis of a Web page: normally, it is the Title that is retrieved from the page first, because it contains general Web page information. Retrieved and processed afterwards is the entire text that is highlighted in some manner, for example, by italics, underlining, or size (in particular, the font size of the text is greater than that of the main text), because the Web crawler assumes these to be the key (highlighted) places in the text.

Some search engines look through metatags of Web pages assuming them to contain page keywords or phrases. However, because metatags often contain unreliable information, some search engines choose not to use them to define the page keywords.

In addition, the entire Web page text is subjected to complete processing. For example, search engines ignoring metatags while defining the keywords of a Web page, search for keywords by checking the text for frequency of use of particular words. To this end, all stopwords, such as "but", "he", "you" and "in/at" as well as all characters and digits are excluded from the text in order to avoid the noise they create during the keyword search.

Finally, a search engine indexes the processed Web page text in a proper manner to let the user obtain, via Web interface (for example, a browser), an easy search tool using a search engine database by entering search queries.

The structure and basic operating principles of search engines are discussed, in particular, in The anatomy of a Large-Scale Hypertextual Web Search Engine, by Brin, S., Page, L., Computer Networks and ISDN Systems, 30(1-7):107-117, 1998; Effective Web Crawling, Castillo, C., PhD thesis, University of Chile, 2004; Crawling the Web. Web Dynamics: Adapting to Change in Content, Size, Topology and Use, ed. by M. Levene, A. Poulovassilis, 153-178, Pant, G., Srinivasan, P., Menczer, F., 2004.

Yet, search engines designed in that manner fall short of current requirements due to the continuously increasing scope and diversity of information available on the Internet. In particular, such text-based search for Web pages containing the pictures or videos of interest to the user provides an extensive target list of Web pages, in which the share of pages actually meeting all user requirements and requests proves low, because this list, due to the features of the search engines under consideration, will also include those Web pages which only contain mentions, discussions, advertising, opinions etc. concerning the desired pictures or videos, but not such pictures or videos themselves. As the total amount and diversity of Web content grows, the share of relevant Web pages at such specific searches will only be decreasing and, consequently, users will have to make up ingenious and, most likely, repeated search queries and to waste time on screening large arrays of search results.

This problem necessitates the creation of specialised, so-called vertical search engines that are strictly oriented towards the search based on the thematic Internet resources.

One of the examples of such a vertical search engine is mobile application search. Here we face additional indexation restrictions. Mobile applications can be conditionally divided into three groups. The first one is "Functional" applications. This group includes applications featuring a function or content that can be easily included in an application description. The second group includes client applications of a large service (e.g. online cinema). The majority content of such application is extracted from the Web while the application itself contains a menu and descriptions at best. The third group includes applications that contain content are designed for offline operation. These include Recipe Book, Online Library, and Phone Book. The content of such application is their best description, but the actual description never contains it due to its inadequate size.

Thus, there is currently a large and rapidly growing amount of content with no text adequately reflecting it on Web pages, while the body content subject to indexing is comprised inside applications and only becomes accessible after the setup file has been downloaded and decompressed.

The currently used content extraction method is based on the direct analysis of the application setup file that is always represented by some type of archive. The setup file is decompressed and the obtained directory is viewed by the user manually. Based on a priori human knowledge about how content is generated and displayed, the user classifies the content of files with data, defines the file content meaning and writes the programme code. The code is meant to carry out the following tasks: extraction of information content from setup files of mobile applications, integration of scattered content elements into a single document, and transformation of application content into a format suitable for further processing.

One shortcoming of the method is a significant share of handwork, as well as the extremely high cost of a search index or other results of computerised data processing.

Currently, there are no known methods for automatic content extraction from applications or sequences of actions that could be reassigned to servers.

One of known patents concerning "vertical" search engines is RF patent for invention No. 2399090, MPK G06F 17/30 dated 10.06.2010 "SYSTEM AND METHOD FOR INTERNET SEARCH OF REAL TIME MULTIMEDIA CONTENT". The invention refers to real time multimedia (AV) content search tools. The technical result is the extension of the scope of real time multimedia content search. The search engine comprises: character search module using the predefined character set to analyse the current downloaded Web page for indications of the available real time AV content broadcasting; database storing the addresses of Web pages on which real time AV content broadcasting was found available; user interface enabling a database search for users; during the analysis, the character search module parses the text content of Web page files first to discover the AV content playback tool characters and then, upon successful discovery, the characters showing that the AV content being played back is, in fact, real time AV content.

This invention helps to partially solve the problem of the low share of pages actually meeting user requirements and requests by creating a vertical search engine and a method specifically intended to search for Web pages with real time AV content broadcasting, or, in other words, the so-called live broadcasting. The typical examples of live AV content on the Internet are television (TV) and radio broadcasting by air studios, special webcasting by professional and amateur studios, and live streaming from Web cameras. Such content is characterised by the impossibility of forward winding via the client playback application.

One drawback of the invention is that such a system and method only implements a Web page search and do not allow useful content to be extracted from setup files of mobile applications for further computerised data processing, in particular, searches.

### Summary of the Invention

The claimed invention is made to devise a method based on a vertical search engine that allows automatic extraction of useful content from setup files of mobile applications for further indexation, computerised data processing and storage of useful content of mobile applications on a server for subsequent searches.

The technical task is tackled on account of the fact that the method for extraction of useful content from setup files of mobile applications for further computerised data processing, in particular, search, contains the following stages:
- download of an application setup file of unknown format from the Internet to a server;
- selection of an archiver for said file;
- decompression of the downloaded setup file into the file directory;
- analysis of the obtained directory and comprise a list of files located therein;
- selection of a file from the list for further analysis;
- selection of software to open the file;
- analysis of the selected file for primary content search;
- compilation of a list of primary content internal location addresses in a form of a rowset;
- analysis of the next file so far as there are files remaining in the directory;
- analysis of the text content of the list of primary content internal location addresses and divide the text of each row into a set of characters identifying the storage method for the relevant content unit, a set of characters identifying the document this content unit pertains to, and a set of characters identifying the type of this content unit;
- division of the rows of content unit internal location addresses by storage method into utility content and useful content;
- removal of utility content;
- selection of the rowsets in the remaining list with content unit internal location addresses that have completely matching groups of characters reflecting the content storage method;
- statistical filtration of the selected groups;
- analysis of the text content of the address list rows by the set of characters identifying a document and generate documents by abstracting;
- extraction of useful content from an application;
- generation of application descriptions;
- storage of the application name, link, and description in the database;
- download of the setup file of a new application and performance of all the above mentioned sequences;
- performance of computerised processing of the obtained database;
- performance of the created indexed array of the database on a server;
- usage of the results for users' search queries coming in via the Internet.

In this case, an archiver is selected from the pre-generated extendable and modifiable list of all known archivers, while file reading software is selected from the pre-generated extendable and modifiable software list. Statistical filtration in this case is carried out using the pre-generated threshold filter values, while the list of primary content internal location addresses is generated via the performance of the following steps: search for intra-file addresses of all units of the lowest level content and inspection of these content units for conformity with the primary content; reselection of software and search for intra-file addresses of low level content in case the content is not primary. Each row of the address list rowset contains information on file location in a directory, a full intra-file address of each unit of primary content specifying a complete list of software used to open this unit, while analysis of the list of primary content internal location addresses is performed using the properties of its text content. The text of each row is divided into a set of characters identifying the storage method for the corresponding content unit, a set of characters identifying the document the content unit pertains to, and a set of characters identifying the type of this content unit. The rows of content unit internal location addresses are divided into addresses via a storage method typical of utility content storage and those with a storage method typical of useful content storage using the pre-generated extendable and modifiable set of rules. Analysis of content units in address rows is undertaken to check whether the content type matches the content storage method. In the rows of addresses of content units stored in a similar manner these rows are selected or, in case of mismatch, deleted. Analysis of the text content of the address list rows is carried out by the set of characters identifying a document and documents are generated via abstracting while determining rows with different sets of characters that identify the storage method for the relevant content unit and those with matching sets of characters identifying the document this content unit pertains to. They are then divided by the document if the sets of characters do not coincide or by the part of the document if the sets of characters coincide, followed by the latter being integrated into a single document by abstracting. Useful content is extracted from an application as a package of documents suitable for further computerised processing, while application descriptions are generated via the integration of the text content of documents into a single text reflecting the package of documents contained in the application. The setup file of a new application is downloaded and all the described sequences are repeated so long as there are new, unprocessed applications in global computer networks and markets.

Mobile application content is characterised by the fact that mobile applications are developed by the vast community of programmers. MA developers use multiple programming languages. Mobile applications are diverse in how they present data to users and in how the data is stored in the application package. There are no rigorous data presentation and storage standards for mobile applications. Content of such applications is unreadable and inaccessible externally. It is for these reasons that the indexation of application content differs from that of Web pages that are presented in the single format html and accessible under the single http protocol. Web page developers focus on optimisation of their pages for easier indexation.

The technical solution proposed in the present invention is also of current importance due to the continuously increasing number of smartphones and the fact that the number of Internet connections from mobile devices in 2013 exceeded that from desktop computers. Another reason is that usage of a smartphone is primarily related to the usage of applications tailored thereto and the classical Web usage is troublesome, given the fact that the user has a small screen, no keyboard, no mouse, etc.

### List of Figures

Fig. 1 depicts a flow diagram that allows the implementation of the method for extraction of useful content from setup files of mobile applications.
Fig. 2 is a schematic illustration of the structure and operation of the system as per the claimed invention.

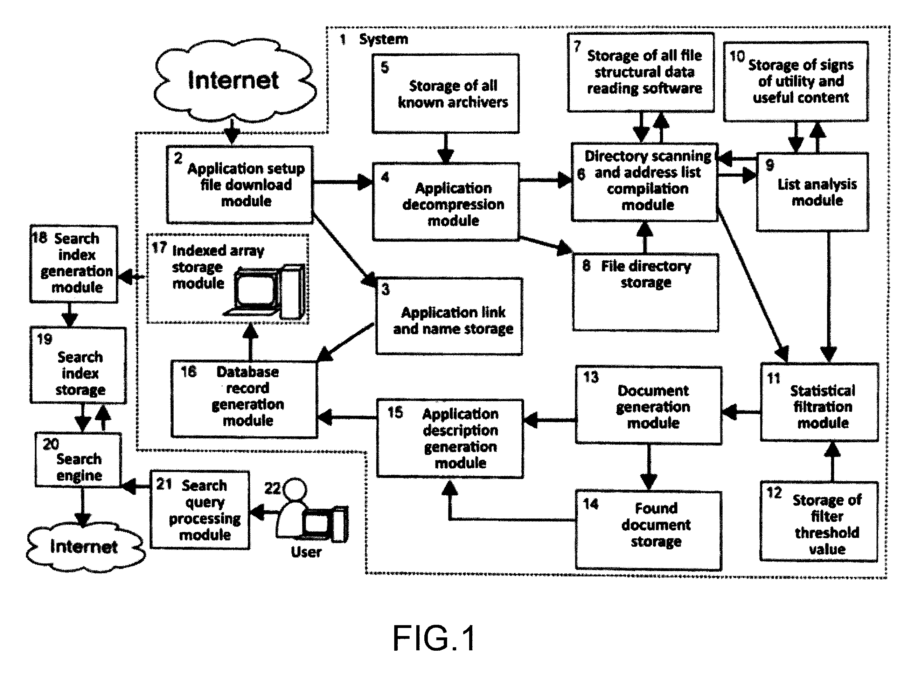

The flow diagram (see Fig. 1) comprises a system itself (1), application setup file download module (2), application link and name storage (3), application decompression module (4), storage of all known archivers (5), directory scanning and address list compilation module (6), storage of all file structural data reading software (7), file directory storage (8), list analysis module (9), storage of signs of utility and useful content (10), statistical filtration module (11), storage of filter threshold value (12), document generation module (13), found document storage (14), application description generation module (15), database record generation module (16), and indexed array storage module (17). The Search index generation module (18) and the search index storage (19) were introduced to support operation of the search engine. Search is carried out through the search engine (20). The user performs a search through the search query processing module (21) and the Internet.

Action sequences aimed at the implementation of the claimed method for extraction of useful content from setup files of mobile applications for further computerised data processing, namely, search, consists of the following steps:
1. An application setup file of unknown format is downloaded from the Internet to a server (application setup file download module (2)). The only thing known about the file is it being a compressed file.
2. Selection of an archiver for said file from the pre-generated extendable and modifiable set of all known archivers (storage of all known archivers (5)).
3. Decompression of the downloaded setup file (application decompression module (4)). A file directory is obtained (file directory storage 8).
4. Analysis of the obtained directory and composition of a list of files contained therein (directory scanning and address list compilation module (6));
5. Selection of a file from the list for further analysis (list analysis module (9));
6. Selection of file reading software from the pre-generated extendable and modifiable software list (storage of all file structural data reading software (7)).
7. The chosen file (assume this is SQL database) is searched for intra-file addresses of all the lowest level content units (in terms of SQL, it means the table name, row name, and column row number).
8. Inspection aimed to determine whether the content units found in intra-file addresses of the lowest level file content pertain to primary content (text, picture, or video).
9. If intra-file addresses of low level content comprise no primary content, the steps in items 6 and 7 are repeated for the content of such addresses.
10. Compilation of a list of internal location addresses of identified primary content that represents a set of rows, each containing information on file location in the directory and a full intra-file address of each primary content unit, specifying a complete list of software used to open such a content unit at each stage.
11. Selection of the next file from the list of files contained in the directory.
12. The generation of the list of primary content internal location addresses is cancelled after the analysis of all the rows of the list of files located in the directory until primary content (text, picture, video) is found.
13. The list of internal location addresses of found primary content is analysed using the properties of its text content and divided the text of each row into a set of characters identifying the storage method for the relevant content unit, a set of characters identifying the document this content unit pertains to, and a set of characters identifying the type of this content unit.
14. The rows of content unit internal location addresses are divided into addresses with a storage method typical of utility content storage and those with a storage method typical of useful content storage based on the pre-generated extendable and modifiable set of rules (storage of signs of utility and useful content (10)).
15. The rows with addresses with a storage method typical of utility content storage are deleted from the list and excluded from further consideration.
16. Performance of a statistical analysis in order to check coincidence of content types in the rows of addresses of content units stored in a similar manner (statistical filtration module (11), storage of filter threshold value (12)).
17. If the percentage ratio between the number of the rows of addresses of content units stored in a similar manner and having a similar content type and address rows inconsistent with this condition is below a certain threshold, the rows of addresses containing this storage method are removed from the list and excluded from further consideration as addresses of presumably utility content. If the above mentioned ratio exceeds the threshold, all the rows of addresses of content units thus stored are supplied with data on this content type.
18. Analysis of the text content of the remaining rows of the internal location address list by a set of characters identifying the document that the relevant content unit pertains to, in order to search for rows with different sets of characters identifying the method of storing the relevant content unit and matching sets of characters identifying the document that this content unit pertains to.
19. If the internal location address list does not contain any rows with matching sets of characters identifying a document, each content unit is defined as a document; if it does, abstracting (integration of parts into a single document) is undertaken (document generation module (13)).
20. Extraction of useful content from an application in the form of a set of documents suitable for subsequent computerised processing.
21. Creation of the description of an application via integration of the text content of documents into a single text reflecting the set of documents contained in the application (application description generation module (15)).
22. The application name, link, and description (database record generation module (16), application link and name storage (3) and indexed array storage module) is stored into the database.
23. The setup file of a new application is downloaded and all the above mentioned sequences are repeated (application setup file download module (2)).
24. The process continues so far as there are new (unprocessed) applications in the global computer networks and markets.
25. Performance of computerised processing of the obtained database, in particular, in order to search for two-level indexation featuring an inverted "Search term - Document Containing the Search Term" index and an inverted "Document - Application containing the document" index (search index generation module (18), search index storage (19), search engine (20)).
26. The search is performed by the user (22) via the Internet and the search query processing module (21).

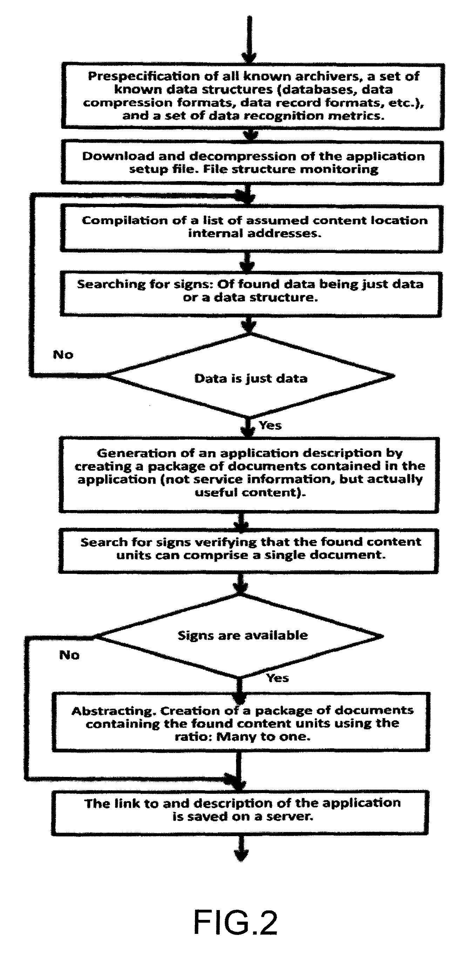

A schematic illustration of the structure and operation of the system as per the claimed invention is shown in Fig. 2.

### Description of the System Operational Structure

The method comprises the following stages: A) An extendable and modifiable set of all known archivers is prespecified, as well as a set of all known data structures (databases, data compression formats, data record formats etc.) and a set of data recognition metrics. B) Analysis of the file directory obtained as a result of downloading and decompression of the setup file of an application. The decompressed directory represents a random set of various file types. These can include archived files, databases, special data presentation formats, and immediate data that are divided into two categories in order to perform the task: Immediate data and Data Structures (everything that is not data but may contain them). The aim is to disclose all data structures, reach data of the lowest level (when data represents immediate data, rather than some structure) and set a certain corresponding address for each found content unit in the application package. C) If any signs are revealed that all data represent immediate data, the generation of a description is launched by dividing the found content into two categories: The first one is content stored in the application created for this purpose ("true" search results), and the second one is service data, or content used by the application itself ("false" search results). D) If signs are identified at stage C) that "true" search results represent documents composed of several found content units, abstracting is performed, i.e. single documents are generated from their parts. If such signs are absent, item E) is performed instead. E) The application name, link, and description comprising a package of documents included in the application are saved to the database.

The proposed method includes the performance of the analysis at stage (B) through decompression of the available setup file by a set of decoding programmes (plugins) adjusted so as to use various archivers. If the operation of some of decoding programmes results in an acceptable file directory appearing at the right place, the archiver employed by this decoding programme is the required one. The archiver name is recorded in the address. Then all the folders are opened in the decompressed directory and a list of files contained therein is made. Each row of this list represents: Archiver's name; Sequentially written path with names of all folders from the root directory to the folder containing the file; file name. Then each of the files is opened by multiple decoding programmes (plugins) adjusted to read various data structures. If the operation of some of decoding programmes allows the user to access the internal content of a file, the data structure that this decoding programme was adjusted to is the required one. Each list row is supplied with data on the structure (how this file is to be opened). Then, knowing what tools should be used to read the internal content, the reading the structure itself is begun. Having reached the lowest level, content (plugin) recognition programmes adjusted for metrics of various content types are applied.

### Embodiments of the Invention

### Embodiment 1

After decompression, the bd directory folder contains example.sql file that represents the SQL database comprising three tables (table_1, table_2, and table_3) composed of two columns (name and data), four rows each, that store text data in the fields. The texts of the initial list will change step-by-step as follows:
The search results in the following list:
   1. "$file: //bd/exempl . sql"

An attempt to open each of the found files is made using a set of decoding programmes (plugins) adjusted to read various data structures.

The decoding program designed for reading the SQL database presents the names of three tables:
1. "$file: //bd/exempl.sql//table_1"
2. "$file: //bd/exempl.sql//table_2"
3. "$file: //bd/exempl.sql//table_3"

Another attempt to open each of the three tables is performed using a set of decoding programmes (plugins) adjusted to read various data structures.

The decoding program designed for reading the SQL database presents the names of six columns:
1. "$file://bd/exempl.sql//table_1/name"
2. "$file://bd/exempl.sql//table_1/data"
3. "$file://bd/exempl.sql//table_2/name"
4. "$file://bd/exempl.sql//table_2/data"
5. "$file://bd/exempl.sql//table_3/name"
6. "$file://bd/exempl.sql//table_3/data"

An attempt to open each of the columns is performed using a set of decoding programmes (plugins) adjusted to read various data structures.

The decoding program designed for reading the SQL database presents the addresses of twenty-four nonempty fields:
1. "$file://bd/exempl.sql//table_1/name/id=1"
2. "$file://bd/exempl.sql//table_1/name/id=2"
3. "$file://bd/exempl.sql//table_1/name/id=3"
4. "$file://bd/exempl.sql//table_1/name/id=4"
5. "$file://bd/exempl.sql//table_1/data/id=1"
6. "$file://bd/exempl.sql//table_1/data/id=2"
7. "$file://bd/exempl.sql//table_1/data/id=3"
8. "$file://bd/exempl.sql//table_1/data/id=4"
9. "$file://bd/exempl.sql//table_2/name/id=1"
10. "$file://bd/exempl.sql//table_2/name/id=2"
11. "$file://bd/exempl.sql//table_2/name/id=3"
12. "$file://bd/exempl.sql//table_2/name/id=4"
13. "$file://bd/exempl.sql//table_2/data/id=1"
14. "$file://bd/exempl.sql//table_2/data/id=2"
15. "$file://bd/exempl.sql//table_2/data/id=3"
16. "$file://bd/exempl.sql//table_2/data/id=4"
17. "$file://bd/exempl.sql//table_3/name/id=1"
18. "$file://bd/exempl.sql//table_3/name/id=2"
19. "$file://bd/exempl.sql//table_3/name/id=3"
20. "$file://bd/exempl.sql//table_3/nanne/id=4"
21. "$file://bd/exempl.sql//table_3/data/id=1"
22. "$file://bd/exempl.sql//table_3/data/id=2"
23. "$file://bd/exempl.sql//table_3/data/id=3"
24. "$file://bd/exempl.sql//table_3/data/id=4"

An attempt to open the content of each field is performed using a set of decoding programmes (plugins) adjusted to read various data structures.

None of the decoding programmes detects any data structures in the field content. This is the first sign that the lowest level data, presumably content, has been reached.

After this, content (plugin) recognition programmes adjusted for metrics of various content types are applied.

A programme designed for text recognition verifies that this is a text. Therefore, the final list of assumed content location internal addresses will be as follows:
1. "$file://bd/exempl.sql//table_1/name/id=1//text"="text"
2. "$file://bd/exempl.sql//table_1/name/id=2//text"="text"
3. "$file.//bd/exempl.sql//table_1/name/id=3//text"="text"
4. "$file://bd/exempl.sql//table_1/name/id=4//text"="text"
5. "$file://bd/exempl.sql//table_1/data/id=1//text"="text"
6. "$file://bd/exempl.sql//table_1/data/id=2//text"="text"
7. "$file://bd/exempl.sql//table_1/data/id=3//text"="text"
8. "$file://bd/exempl.sql//table_1/data/id=4//text"="text"
9. "$file://bd/exempl.sql//table_2/name/id=1//text"="text"
10. "$file://bd/exempl.sql//table_2/name/id=2//text"="text"
11. "$file://bd/exempl.sql//table_2/name/id=3//text"="text"
12. "$file://bd/exempl.sql//table_2/name/id=4//text"="text"
13. "$file://bd/exempl.sql//table_2/data/id=1//text"="text"
14. "$file://bd/exempl.sql//table_2/data/id=2//text"="text"
15. "$file://bd/exempl.sql//table_2/data/id=3//text"="text"
16. "$file://bd/exempl.sql//table_2/data/id=4//text"="text"
17. "$file://bd/exempl.sql//table_3/name/id=1//text"="text"
18. "$file://bd/exempl.sql//table_3/name/id=2//text"="text"
19. "$file://bd/exempl.sql//table_3/name/id=3//text"="text"
20. "$file://bd/exempl.sql//table_3/name/id=4//text"="text"
21. "$file://bd/exempl.sql//table_3/data/id=1//text"="text"
22. "$file://bd/exempl.sql//table_3/data/id=2//text"="text"
23. "$file://bd/exempl.sql//table_3/data/id=3//text"="text"
24. "$file://bd/exempl.sql//table_3/data/id=4//text"="text"

Analysis at stage C) is carried out by parsing the text content of the final list of assumed content location internal addresses obtained at stage B). This list has the following properties:
1. The first property of the content identifier is that the text of each of its rows allows the user to unambiguously extract exactly the content it identifies from the application.
2. The text of each of its rows contains a text indicative of how a certain quantity of content units is stored (storage method identifier), a text identifying a specific content unit from that quantity (document identifier), and a text identifying a content type (content type identifier). This is an exhaustive list and the text contains nothing else.
3. Content units stored in the same manner (featuring the same storage method identifier) fall within one content group.
4. Sets of characters reflecting the texts of storage method identifiers and document identifiers can be singled out from the texts of content identifiers, based on their recurrence in the list (the list imparts an additional property to the texts of content identifiers to allow the decoding thereof).

Division of texts of each row into storage method identifiers, content type identifiers, and document identifiers based on their recurrence in the list is made with regard to the properties of the following sets of characters:
1. Set of matching characters from different rows (rows with the same number of characters are selected) - the storage method identifier.
2. Set of characters reflecting the content type identifier (this set of characters was assigned in the previous procedure) - the content type identifier.
3. Set of characters not included in the previous two groups (the feature distinguishing the rows from one another) - the document identifier.

These properties allow a row to be divided into groups by replacing the set of characters reflecting the presumable position of the document identifier with a set of similar characters in all the rows of the list. Afterwards the replacements resulted in the greatest number of rows with absolutely identical text is determined.

### Embodiment 2

During the row processing, absolutely different algorithms for selection of characters to be replaced can be chosen. In the final list of assumed content location internal addresses from Embodiment 1, the entire text between characters "I" will be replaced in succession. The initial list:
1. "$file://bd/exempl.sql//table_1/name/id=1//text"="text"
2. "$file://bd/exempl.sql//table_1/name/id=2//text"="text"
3. «$file://bd/exempl.sql//table_1/name/id=3//text»=«text»
4. "$file://bd/exempl.sql//table_1/name/id=4//text"="text"
5. "$file://bd/exempl.sql//table_1/data/id=1//text"="text"
6. "$file://bd/exempl.sql//table_1/data/id=2//text"="text"
7. "$file://bd/exempl.sql//table_1/data/id=3//text"="text"
8. "$file://bd/exempl.sql//table_1/data/id=4//text"="text"
9. "$file://bd/exempl.sql//table_2/name/id=1//text"="text"
10. "$file://bd/exempl.sql//table_2/name/id=2//text"="text"
11. «$file.//bd/exempl.sql//table_2/name/id=3//text»=«text»
12. "$file://bd/exempl.sql//table_2/name/id=4//text"="text"
13. "$file://bd/exempl.sql//table_2/data/id=1//text"="text"
14. "$file://bd/exempl.sql//table_2/data/id=2//text"="text"
15. "$file://bd/exempl.sql//table_2/data/id=3//text"="text"
16. "$file://bd/exempl.sql//table_2/data/id=4//text"="text"
17. "$file://bd/exempl.sql//table_3/name/id=1//text"="text"
18. "$file.//bd/exempl.sql//table_3/name/id=2//text"="text"
19. "$file://bd/exempl.sql//table_3/name/id=3//text"="text"
20. "$file://bd/exempl.sql//table_3/name/id=4//text"="text"
21. "$file://bd/exempl.sql//table_3/data/id=1//text"="text"
22. "$file://bd/exempl.sql//table_3/data/id=2//text"="text"
23. "$file://bd/exempl.sql//table_3/data/id=3//text"="text"
24. "$file://bd/exempl.sql//table_3/data/id=4//text"="text"

The texts of all the rows differ from one another. The character group "$file:" is replaced with "******" as follows:
1. "******//bd/exempl.sql//table_1/name/id=1//text"="text"
2. "******//bd/exempl.sql//table_1/name/id=2//text"="text"
3. "******//bd/exempl.sql//table_1/name/id=3//text"="text"
4. "******//bd/exempl.sql//table_1/name/id=4//text"="text"
5. "******//bd/exempl.sql//table_1/data/id=1//text"="text"
6. "******//bd/exempl.sql//table_1/data/id=2//text"="text"
7. "******//bd/exempl.sql//table_1/data/id=3//text"="text"
8. "******//bd/exempl.sql//table_1/data/id=4//text"="text"
9. "******//bd/exempl.sql//table_2/name/id=1//text"="text"
10. "******//bd/exempl.sql//table_2/name/id=2//text"="text"
11. "******//bd/exempl.sql//table_2/name/id=3//text"="text"
12. "******//bd/exempl.sql//table_2/name/id=4//text"="text"
13. "******//bd/exempl.sql//table_2/data/id=1//text"="text"
14. "******//bd/exempl.sql//table_2/data/id=2//text"="text"
15. "******//bd/exempl.sql//table_2/data/id=3//text"="text"
16. "******//bd/exempl.sql//table_2/data/id=4//text"="text"
17. "******//bd/exempl.sql//table_3/name/id=1//text"="text"
18. "******//bd/exempl.sql//table_3/name/id=2//text"="text"
19. "******//bd/exempl.sql//table_3/name/id=3//text"="text"
20. "******//bd/exempl.sq!//table_3/name/id=4//text"="text"
21. "******//bd/exempl.sql//table_3/data/id=1//text"="text"
22. "******//bd/exempl.sql//table_3/data/id=2//text"="text"
23. "******//bd/exempl.sql//table_3/data/id=3//text"="text"
24. "******//bd/exempl.sql//table_3/data/id=4//text"="text"

The texts of all the rows are still different - so nothing is written in the temporary file. The same will happen if the groups of characters "bd" and "exempl.sql" are replaced with asterisks: these text areas are similar in all the rows and, therefore, must pertain to the text of storage method identifier. If asterisks are used to replace the group of characters reflecting a table name, three rows will be obtained with absolutely identical text reflecting the first row in the column "name" in three tables: "table_1", "table_2", and "table_3". The following is written in the temporary file:
1. "$file://bd/exempl.sql//*******/name/id=1 //text"="text"
2. "$file://bd/exempl.sql//*******/name/id=1 //text"="text"
3. "$file://bd/exempl.sql//*******/name/id=1 //text"="text"

If asterisks are used to replace a column name, two rows reflecting the first row in both columns "table_1" will be added to the temporary file that will thus look as follows:
Group of characters = "table_1"
   1. "$file://bd/exempl.sql//*******/name/id=1 //text"="text"
   2. "$file://bd/exempl.sql//*******/name/id=1 //text"="text"
   3. "$file://bd/exempl.sql//*******/name/id=1 //text"="text"
Group of characters = "name"
   1. "$file://bd/exempl.sql//table_1/****/id=1//text"="text"
   2. "$file://bd/exempl.sql//table_1/****/id=1//text"="text"

If asterisks are used to replace a row number in the "name" column, four rows reflecting all the rows in the "name" column of "table_1" will be added to the temporary file that will thus look as follows:
Group of characters = "table_1"
   1. "$file.//bd/exempl.sql//*******/name/id=1//text"="text"
   2. "$file://bd/exempl.sql//*******/name/id=1 //text"="text"
   3. "$file://bd/exempl.sql//*******/name/id=1 //text"="text"
Group of characters = "name"
   1. "$file://bd/exempl.sql//table_1/****/id=1//text"="text"
   2. "$file://bd/exempl.sql//table_1/****/id=1//text"="text"
Group of characters = "id=1"
   1. "$file://bd/exempl.sql//table_1/name/****//text"="text"
   2. "$file://bd/exempl.sql//table_1/name/****//text"="text"
   3. "$file://bd/exempl.sql//table_1/name/****//text"="text"
   4. "$file://bd/exempl.sql//table_1/name/****//text"="text"

Replacing the group of characters that reflect a row number with asterisks will provide the greatest number of rows with total text coincidence. Thus, the following identifiers will be assigned for the first row of the initial list:
Storage method identifier:
   "$file://bd/exempl.sql//table_1/name/";
   Content unit identifier: "id=1";
   Content type identifier: "text"

It means that the computer-implemented method, without using a priori human knowledge about the organisation of file structures was used to obtain information that the "$file:" root directory, "bd" folder, "exempl.sql" SQL file, "table-1" table, and "name" column store the content with a similar value for this storage method (Name in our case), and a text format.

The further processing of the list includes the generation of a row in the list of storage method identifiers following the processing of the first row. To this end, the document identifier text is cut from the row text and a list of all document identifiers that have this storage method identifier is added to the row end. For Embodiment 2: the row
"$file://bd/exempl.sql//table_1/name/id=1//text "="text"
is transformed into the row of the list of storage method identifiers:
"$file://bd/exempl.sql//table_1 /name//text"="text" (id=1,2,3,4).

Afterwards, all the rows with the above mentioned storage method identifier are removed from the initial list and the whole procedure is repeated so far as there are rows in the initial list. It means that the processing of the final list of assumed content location internal addresses from Embodiment 2 will end with generation of a list of storage method identifiers in the following form:
Initial list:
   1. "$file://bd/exempl.sql//table_1/name/id=1//text"="text"
   2. "$file://bd/exempl.sql//table_1/name/id=2//text"="text"
   3. «$file://bd/exempl.sql//table_1/name/id=3//text»=«text»
   4. "$file://bd/exempl.sql//table_1/name/id=4//text"="text"
   5. "$file://bd/exempl.sql//table_1/data/id=1//text"="text"
   6. "$file://bd/exempl.sql//table_1/data/id=2//text"="text"
   7. "$file://bd/exempl.sql//table_1/data/id=3//text"="text"
   8. "$file://bd/exempl.sql//table_1/data/id=4//text"="text"
   9. "$file://bd/exempl.sql//table_2/name/id=1//text"="text"
   10. "$file://bd/exempl.sql//table_2/name/id=2//text"="text"
   11. "$file://bd/exempl.sql//table_2/name/id=3//text"="text"
   12. "$file://bd/exempl.sql//table_2/name/id=4//text"="text"
   13. "$file://bd/exempl.sql//table_2/data/id=1//text"="text"
   14. "$file.//bd/exempl.sql//table_2/data/id=2//text"="text"
   15. "$file://bd/exempl.sql//table_2/data/id=3//text"="text"
   16. "$file://bd/exempl.sql//table_2/data/id=4//text"="text"
   17. "$file://bd/exempl.sql//table_3/name/id=1//text"="text"
   18. "$file://bd/exempl.sql//table_3/name/id=2//text"="text"
   19. "$file://bd/exempl.sql//table_3/name/id=3//text"="text"
   20. "$file://bd/exempl.sql//table_3/name/id=4//text"="text"
   21. "$file://bd/exempl.sql//table_3/data/id=1//text"="text"
   22. "$file://bd/exempl.sql//table_3/data/id=2//text"="text"
   23. "$file://bd/exempl.sql//table_3/data/id=3//text"="text"
   24. "$file://bd/exempl.sql//table_3/data/id=4//text"="text"
Target list:
   1. "file://bd/exempl.sql//table_1/name//text"="text"(id=1,2, 3,4)
   2. "$file://bd/exempl.sql//table_l/data//text"="text"(id=1,2 ,3,4)
   3. "$file://bd/exempl.sql//table_2/name//text"="text"(id=1,2 ,3,4)
   4. "$file://bd/exempl.sql//table_2/data//text"="text"(id=1,2 ,3,4)
   5. "$file://bd/exempl.sql//table_3/name//text"="text"(id=1,2 ,3,4)
   6. "$file://bd/exempl.sql//table_3/data//text"="text"(id=1,2 ,3,4)

A complete algorithm for processing of the initial list and generation of the list of content identifiers is shown in the flow diagram in Fig. 2.

After this processing stage, the "initial" list of assumed content location internal addresses is transformed into a new list of storage method identifiers with the following properties:
1. By going over the entire list of document identifiers pertaining to one storage method, the user can define more exactly the type of content (stored using this method) based on statistical techniques (while the data type of one content unit may be wrongly determined, the likelihood of error of determination of the data type of 100 content units reduces drastically).
2. If the list of document identifiers consists of two elements or fewer, such data is beneath notice.
3. If statistical analysis fails to determine the content type, the data stored using this storage method is beneath notice.
4. If different storage methods have matching lists of document identifiers, such storage methods are used to store different fragments of the same documents.

Based on these properties and by parsing the text content of this list rows, the determined content is divided into two categories: The first one is content stored in the application created for this purpose ("true" search results), and the second one is service data, or content used by the application itself ("false" search results). "True" search results are included in the content list to generate the description of an application, and that is where the analysis of C) stage ends.

If a similar list of document identifiers can be found in some rows of the list of storage method identifiers, this is a cue to pass to:

the stage D) analysis performed via the study of the text content in the rows of the list of storage method identifiers. The list of document identifiers recurring in a few rows of the list of storage method identifiers is defined. The first element is taken from this list and is associated with all the content location internal addresses that feature various storage methods and contain a given document identifier.

### Embodiment 3

A file has been found, that represents an SQLite database; - database tables are browsed, a row in JSON format is found in one of the fields; - fields of this JSON package are browsed, a text row is found in one of the fields of this package; - it is stored as "presumably text content" and the scanning continues.

Assume that the database is found in 123.sql file, db folder of an application package. This database contains "example_table" table, features a primary key "id", and the "data" column comprises the package JSON that, in turn, contains some text in the "text" field that we have stored as "presumably text content".

Then the path to the first unit of this content can be shown as follows, for instance:
$file://db/123.sql$sqlite://example_table,id=1/ data$json.7/text,
while the list of assumed content location internal addresses will be as follows:
"$file.//db/123.sql$sqlite://example_table,id=1 /data$json.7/text"="text"
"$file://db/123.sql$sqlite.//example_table,id=2 /data$json://text"="text"
"$file://db/123.sql$sqlite.7/example_table,id=3 /data$json://text"="text"
"$file://db/123.sql$sqlite"//example_table,id=1 /img"="image"
"$file://db/123.sql$sqlite://example_table,id=2 /img"="image"
"$file://db/123.sql$sqlite://example_table,id=3 /img"="image"
"$file://db/123.sql$sqlite://example_table,id=1 /data$json://header"="text"
"$file://db/123.sql$sqlite://example_table,id=2 /data$json://header"="text"
"$file://db/123.sql$sqlite://example_table,id=3 /data$json://header"="text"

The storage method identifiers are listed below:
"$file://db/123.sql$sqlite://example_table,id=% id-1%/data$json://text"="text"(idl=1,2,3)
"$file://db/123.sql$sqlite://example_table,id=% id-1%/img"="image"(idl=1,2,3)
"$file://db/123.sql$sqlite://example_table,id=% id-1%/data$json.//header"="text"(idl=1,2,3)

The list of documents generated by of the end of D) stage is given below:
id=1:("$file://db/123.sql$sqlite://example_tabl e,id=1/data$json://text"="text",
"$file://db/123.sql$sqlite://example_table,id=1 /img"="image",
"$file://db/123.sql$sqlite://example_table,id=1 /data$json://header"="text");
id=2:("$file://db/123.sql$sqlite://example_tabl e,id=2/data$json://text"="text",
"$file://db/123.sql$sqlite://example_table,id=2 /img"="image",
"$file://db/123.sql$sqlite://example_table,id=2 /data$json://header"="text");
id=3:("$file://db/123.sql$sqlite://example_tabl e,id=3/data$json://text"="text",
"$file://db/123.sql$sqlite://example_table,id=3 /img"="image",
"$file://db/123.sql$sqlite://example_table,id=3 /data$json://header"="text").

It means that each content unit has three fields - a picture and two more text fields.

Embodiment 1 and Embodiment 2 present the system's structure and operation as per the claimed invention.

It is the developed structure that allows content to be extracted from setup files of mobile applications via the process that can be reassigned to the server. The presented method is promising in terms of elimination of the necessity for handwork in the process of content extraction from mobile applications.

The method is implemented due to the system (see Fig. 1) in a form of a hardware and software package. The hardware and software package can be used separately from or in conjunction with other hardware and software packages on any computer featuring OS Windows, Linux etc. and with a hard drive space sufficient to save the downloaded setup file of an application (from 100 MB to 1 GB plus operating system requirements).

The above mentioned embodiments prove the completion of the established technical task of devising a method based on a vertical search engine allowing automatic extraction of useful content from setup files of mobile applications for further indexation, computerised data processing, and storage of useful content of mobile applications in a server-based database for subsequent searches.

The embodiments also confirm the industrial applicability of the method.

List of positions:
1. System
2. Application setup file download module
3. Application link and name storage
4. Application decompression module
5. Storage of all known archivers
6. Directory scanning and address list compilation module
7. Storage of all file structural data reading software
8. File directory storage
9. List analysis module
10. Storage of signs of utility and useful content
11. Statistical filtration module
12. Storage of filter threshold value
13. Document generation module
14. Found document storage
15. Application description generation module
16. Database record generation module
17. Indexed array storage module
18. Search index generation module
19. Search index storage
20. Search engine
21. Search query processing module
22. User

## Claims

1. A method for extraction of useful content from setup files of mobile applications for further computerised data processing that comprises the following stages:
- an application setup file is downloaded, always in a form of an archive, from the Internet to a server;
- selection of an archiver for said file;
- if the archiver has been successfully selected, the downloaded setup file is decompressed into the file directory;
- analysis of the obtained directory and comprise a list of files located therein;
- selection of a file from the list for further analysis;
- selection of software to read the file by searching through all the known formats;
- if the file reading software has been successfully selected, the selected file is analysed via primary content search;
- compilation of a list of primary content internal location addresses in a form of a rowset;
- the analysis the next file is performed so far as there are files in the directory;
- analysis of the text content of the list of primary content internal location addresses and divide the text of each row into a set of characters identifying the storage method for the relevant content unit, a set of characters identifying the document this content unit pertains to, and a set of characters identifying the type of this content unit;
- division of the rows of content unit internal location addresses by storage method into utility content and useful content;
- removal of utility content;
- selection of the rowsets in the remaining list with content unit internal location addresses that have completely matching groups of characters reflecting the content storage method;
- statistical filtration of the selected groups;
- analysis of the text content of the address list rows by the set of document identifying characters and selection of the address groups of content units pertaining to each document of application useful content;
- extraction of useful content pertaining to each document from the application into a separate file, thus generating the application documents;
- indexation of the obtained document files of the application in terms of their belonging thereto, thus generating a description of its content;
- storage of the application name, link, and description in the database;
- download of the setup file of a new application and performance of all the above mentioned sequences;
- performance of computerised processing of the obtained database;
- performance of the created indexed array of the database on a server;
- usage of the results for users' search queries coming in via the Internet.

2. The method, according to claim 1 that includes the selection of an archiver from the pre-generated extendable and modifiable set of all known archivers.

3. The method, according to claim 1 that includes compilation of a set of files by generating rows that contain a full path to the file in the directory, and the file name.

4. The method, according to claim 1 that includes the selection of file reading software from the pre-generated extendable and modifiable software list.

5. The method, according to claim 1 that includes the analysis of the chosen file for the primary content search by performing the following steps: searching for intra-file addresses of all the lowest level content units and checking these content units for consistency with the primary content; if the content is not primary, the software is reselected, the data nested structure is opened, all the intrastructural addresses of the lower level content are checked, and procedure is repeated like this until the primary content is found in the intrastructural addresses of the lowest level.

6. The method, according to claim 1 that includes each row of the address list rowsets containing information on file location in the directory and a full intra-file address of each primary content unit specifying all the stages of extraction of this primary content unit and a complete list of software used to open such a content unit at each stage.

7. The method, according to claim 1 that includes the analysis of the text content of the list of primary content location internal addresses performed via selecting sets of characters by searching through combinations or on the basis of empiric rules, and by assigning a meaning to this set of characters based on the data on its location and recurrence in the list.

8. The method, according to claim 1 that includes the division of rows of content unit internal location addresses into addresses with a storage method typical of storing utility content and those with a storage method typical of storing useful content based on the pre-generated extendable and modifiable set of rules.

9. The method, according to claim 1 that includes statistical filtration on the basis of the following condition: if the files contained in a group are of the same type, the content is useful, and if the files contained in a group are of different types, the content is of utility type; in this case the rule for exceeding the threshold value by the percentage of files of different types is applied; the content types (database, text, sound, picture, video) can have different formats, but will still remain the type.

10. The method, according to claim 1 that includes the analysis of the text content of the address list rows by a set of characters identifying a document and generation of documents via the following steps: analysis of the text content of the remaining list rows with respect to searching for rows with different sets of symbols identifying the storage method and with matching sets of characters identifying the document that the content addressed is this row, pertains to; if there are no such rows in the list of internal location addresses, each content unit is defined as a separate document; if there are such rows, the rowsets are selected featuring matching document identifiers and different storage method identifiers; then the content stored at the addresses selected for these groups is integrated in documents by putting their parts together.

11. The method, according to claim 1 that includes the extraction of useful content from an application as a package of documents suitable for subsequent computerised processing.

12. The method, according to claim 1 that includes the generation of application descriptions by integrating the text content of documents into a single text reflecting the set of documents contained in the application.

13. The method, according to claim 1 that includes the download of the setup file of a new application and performance of all the described sequences so far as there are new, unprocessed applications in global computer networks and markets.
